(19) Europäisches Patentamt
European Patent Office
Office européen des brevets

(11) EP 4 733 154 A1

(12) EUROPÄISCHE PATENTANMELDUNG

(43) Veröffentlichungstag:
29.04.2026 Patentblatt 2026/18

(21) Anmeldenummer: 25151475.8

(22) Anmeldetag: 13.01.2025

(51) Internationale Patentklassifikation (IPC):
B60T 8/17 (2006.01) B60T 8/1755 (2006.01)
B60T 8/24 (2006.01)

(52) Gemeinsame Patentklassifikation (CPC):
B60T 8/1708; B60T 8/1755; B60T 8/248;
B60T 2201/04; B60T 2201/12; B60T 2230/06

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 23.10.2024 EP 24208404

(71) Anmelder: Deere & Company
Moline, IL 61265 (US)

(72) Erfinder:
• FRITZ, NORBERT
68163 Mannheim (DE)
• BAUMANN, JULIAN
68163 Mannheim (DE)

(74) Vertreter: Dehnhardt, Florian Christopher
John Deere GmbH & Co. KG
Global Intellectual Property Services
John-Deere-Straße 70
68163 Mannheim (DE)

(54) **VERFAHREN ZUR QUERSTABILISIERUNG EINES LANDWIRTSCHAFTLICHEN FAHRZEUGGESPANNS**

(57) Bei einem Verfahren zur Querstabilisierung eines landwirtschaftlichen Fahrzeuggespanns (16), das aus einem landwirtschaftlichen Traktor (12) sowie einem daran angebrachten Anhänger (14) besteht, ist vorgesehen, dass von einer Kontrolleinheit (22) mittels einer dem landwirtschaftlichen Traktor (12) zugeordneten Sensoranordnung (36) ein Istwert einer eine Gierrate des landwirtschaftlichen Traktors (12) charakterisierenden Gierratengröße ermittelt sowie zur Erkennung einer Über- oder Untersteuerungsneigung des landwirtschaftlichen Traktors (12) mit einem für die Gierratengröße vorgegebenen Sollwert verglichen wird, wobei die Vorgabe des Sollwerts seitens der Kontrolleinheit (22) entsprechend einem aufgrund von Lenkeinschlag und Fahrtgeschwindigkeit des landwirtschaftlichen Traktors (12) zu erwartenden Gierverhalten erfolgt. Hierbei wird von der Kontrolleinheit (22) bei Erkennung einer in einem Anhängerbetrieb auftretenden Übersteuerungsneigung des landwirtschaftlichen Traktors (12) auf eine schubbedingt forcierte Knickwinkelzunahme oder bei Erkennung einer in einem Anhängerbetrieb auftretenden Untersteuerungsneigung des landwirtschaftlichen Traktors (12) auf eine schubbedingt retardierte Knickwinkelabnahme geschlossen sowie durch fahrerunabhängiges Eingreifen in Radbremseinrichtungen (56, 58) ausschließlich des Anhängers (14) zumindest teilweise kompensiert.

FIG. 2

## Beschreibung

Die Erfindung betrifft ein Verfahren zur Querstabilisierung eines landwirtschaftlichen Fahrzeuggespanns, bestehend aus einem Zugfahrzeug in Gestalt eines landwirtschaftlichen Traktors sowie einem daran angebrachten Anhänger, wobei von einer Kontrolleinheit mittels einer dem landwirtschaftlichen Traktor zugeordneten Sensoranordnung ein Istwert einer eine Gierrate des landwirtschaftlichen Traktors charakterisierenden Gierratengröße ermittelt sowie zur Erkennung einer Über- oder Untersteuerungsneigung des landwirtschaftlichen Traktors mit einem für die Gierratengröße vorgegebenen Sollwert verglichen wird, wobei die Vorgabe des Sollwerts seitens der Kontrolleinheit entsprechend einem aufgrund von Lenkeinschlag und Fahrtgeschwindigkeit des landwirtschaftlichen Traktors zu erwartenden Gierverhalten erfolgt.

In diesem Zusammenhang geht aus der DE 198 59 953 A1 ein Verfahren zur Stabilisierung eines aus einem Zugfahrzeug und einem Anhänger bestehenden Fahrzeuggespanns hervor, bei dem im Rahmen einer Fahrdynamikregelung unter anderem in Abhängigkeit einer zwischen einem Sollwert und einem Istwert einer Gierrate des Zugfahrzeugs auftretenden Abweichung querstabilisierende Bremseingriffe am Zugfahrzeug durchgeführt werden. Der Sollwert für die Gierrate wird hierbei unter Verwendung eines Fahrzeugmodells ermittelt, in das beispielsweise die Fahrzeuggeschwindigkeit und ein für das Zugfahrzeug eingestellter Lenkwinkel eingehen. Einem auf den Anhänger zurückgehenden Anteil am Gierverhalten wird in diesem Zusammenhang lediglich indirekt und damit unzureichend Rechnung getragen.

Es ist daher Aufgabe der vorliegenden Erfindung, ein Verfahren der eingangs genannten Art dahingehend weiterzubilden, dass einem auf eine erkannte Über- oder Untersteuerungsneigung des Zugfahrzeugs bzw. landwirtschaftlichen Traktors zurückgehender Anteil eines daran angebrachten Anhängers hinsichtlich einer verbesserten Querstabilisierung entsprechend Rechnung getragen wird.

Diese Aufgabe wird durch ein Verfahren zur Querstabilisierung eines landwirtschaftlichen Fahrzeuggespanns mit den Merkmalen des Patentanspruchs 1 gelöst.

Das erfindungsgemäße Verfahren zur Querstabilisierung eines landwirtschaftlichen Fahrzeuggespanns, das aus einem Zugfahrzeug in Gestalt eines landwirtschaftlichen Traktors sowie einem daran angebrachten Anhänger besteht, sieht vor, dass von einer Kontrolleinheit mittels einer dem landwirtschaftlichen Traktor zugeordneten Sensoranordnung ein Istwert einer eine Gierrate des landwirtschaftlichen Traktors charakterisierenden Gierratengröße ermittelt sowie zur Erkennung einer Über- oder Untersteuerungsneigung des landwirtschaftlichen Traktors mit einem für die Gierratengröße vorgegebenen Sollwert verglichen wird, wobei die Vorgabe des Sollwerts seitens der Kontrolleinheit entsprechend einem aufgrund von Lenkeinschlag und Fahrtgeschwindigkeit des landwirtschaftlichen Traktors zu erwartenden Gierverhalten erfolgt. Hierbei wird von der Kontrolleinheit bei Erkennung einer in einem Anhängerbetrieb auftretenden Übersteuerungsneigung des landwirtschaftlichen Traktors auf eine schubbedingt forcierte Knickwinkelzunahme oder bei Erkennung einer in einem Anhängerbetrieb auftretenden Untersteuerungsneigung des landwirtschaftlichen Traktors auf eine schubbedingt retardierte Knickwinkelabnahme geschlossen sowie durch fahrerunabhängiges Eingreifen in Radbremseinrichtungen ausschließlich des Anhängers zumindest teilweise kompensiert.

Die Erfindung beruht auf der Erkenntnis, dass bei landwirtschaftlichen Traktoren angesichts der vergleichsweise geringen Fahrtgeschwindigkeiten von höchstens 60 km/h im Straßenverkehr ein Über- oder Untersteuern in der Regel auf Schubkräfte zurückgeht, die seitens eines über eine Deichsel an einer Anhängekupplung des landwirtschaftlichen Traktors angebrachten Anhängers verursacht werden. Bei derartigen Fahrtgeschwindigkeiten sind querdynamische Effekte, wie sie beispielsweise im LKW-Bereich beim Durchfahren von Kurven mit überhöhter Fahrtgeschwindigkeit auftreten können, weitgehend ohne Belang.

So führen die seitens des Anhängers auf das Traktorheck ausgeübten Schubkräfte für den Fall, dass Lenkeinschlag und Knickwinkel gleichsinnig orientiert sind (d.h. die Deichselstellung korrespondiert mit dem Verlauf der aufgrund des Lenkeinschlags vorgegebenen Kurvenbahn des landwirtschaftlichen Traktors), tendenziell zu einem Übersteuern des landwirtschaftlichen Traktors, da das Traktorheck über die Anhängekupplung zur Kurvenaußenseite hin gedrückt wird. Hieraus ergibt sich typischerweise eine mehr oder minder vorauseilende, mithin "forcierte" Zunahme des Knickwinkels zwischen landwirtschaftlichem Traktor und Anhänger, also desjenigen Winkels, der zwischen der Längsachse des landwirtschaftlichen Traktors und der Längsachse des Anhängers eingeschlossen ist.

Sind Lenkeinschlag und Knickwinkel demgegenüber gegensinnig orientiert (d.h. die Deichselstellung korrespondiert nicht mit der aufgrund des Lenkeinschlags vorgegebenen Kurvenbahn des landwirtschaftlichen Traktors), so führen die seitens des Anhängers auf das Traktorheck ausgeübten Schubkräfte tendenziell zu einem Untersteuern des landwirtschaftlichen Traktors, da das Traktorheck über die Anhängekupplung zur Kurveninnenseite hin gedrückt wird. Daraus ergibt sich eine mehr oder minder nacheilende, mithin "retardierte" Abnahme des Knickwinkels zwischen landwirtschaftlichem Traktor und Anhänger.

Beide Fahrsituationen haben in Form eines Gierens eine Drehung um die Hochachse des landwirtschaftlichen Traktors zur Folge, was sich in einer entsprechenden Gierrate jeweils unterschiedlicher Richtung bemerkbar macht. Dementsprechend schließt die Kontrolleinheit auf das Vorliegen einer Über- bzw. Untersteuerungsneigung des landwirtschaftlichen Traktors, wenn der Betrag des Istwerts der Gierratengröße den Betrag des Sollwerts der Gierratengröße über- bzw. unterschreitet.

Ein zusätzlicher Hinweis, ob ein derartiges Verhalten schubbedingt ist, ergibt sich aus den jeweiligen Richtungen von Lenkeinschlag und Knickwinkel zueinander. So besteht die Möglichkeit, dass die Kontrolleinheit von einer schubbedingt forcierten Knickwinkelzunahme bzw. einer schubbedingt retardierten Knickwinkelabnahme ausschließlich dann ausgeht, wenn sich aufgrund eines Vergleichs der Vorzeichen von Lenkeinschlag und Knickwinkel ergibt, dass diese in gleiche bzw. entgegengesetzte Richtungen weisen.

Wie anfällig ein landwirtschaftliches Fahrzeuggespann für das Auftreten derartiger Instabilitäten ist, hängt unter anderem von den Traktions- bzw. Masseverhältnissen von landwirtschaftlichem Traktor und Anhänger ab.

Wird unter derartigen Bedingungen eine Über- oder Untersteuerungsneigung des landwirtschaftlichen Traktors erkannt, so ist es möglich, durch hinreichendes Abbremsen des Anhängers eine querstabilisierende Knickwinkelreduzierung herbeizuführen. Anschaulich geschieht dies also durch "Geradeziehen" des landwirtschaftlichen Fahrzeuggespanns. Eine Durchführung insofern wirkungsloser Bremseingriffe am Zugfahrzeug, wie es im Stand der Technik vorgesehen ist, unterbleibt dementsprechend.

Der Sollwert der Gierratengröße kann von der Kontrolleinheit ausgehend von Lenkeinschlag und Fahrtgeschwindigkeit des landwirtschaftlichen Traktors beispielsweise auf Grundlage eines sog. linearen Einspurmodells bestimmt werden. Unter Annahme einer standardisierten Deichsellänge lässt sich ferner eine Aussage hinsichtlich Vorzeichen und ungefährem Betrag des Knickwinkels treffen. Alternativ ist dessen unmittelbare sensorische Erfassung mittels eines der Anhängekupplung zugeordneten Drehwinkelsensors oder dergleichen denkbar.

Vorteilhafte Weiterbildungen des erfindungsgemäßen Verfahrens zur Querstabilisierung eines landwirtschaftlichen Fahrzeuggespanns gehen aus den Unteransprüchen hervor.

Um sicherzugehen, dass ein fahrerunabhängiges Eingreifen in die Radbremseinrichtungen des Anhängers auf die eingangs beschriebenen Fahrsituationen beschränkt bleibt, kann vorgesehen sein, dass die Kontrolleinheit von einer schubbedingt forcierten Knickwinkelzunahme oder einer schubbedingt retardierten Knickwinkelabnahme ausschließlich dann ausgeht, wenn zugleich eine Betätigung einer Betriebsbremsanlage von landwirtschaftlichem Traktor und Anhänger, eines traktorseitigen Retarders und/oder eine Bergabfahrt des landwirtschaftlichen Fahrzeuggespanns erkannt wird. In all diesen Fällen kann ein vermehrtes Schieben seitens des Anhängers auftreten. So kommt es bei Einsatz des Retarders, also der Durchführung einer "Motorbremsung" des landwirtschaftlichen Traktors, zu einer Bremsverzögerung des landwirtschaftlichen Traktors gegenüber dem daran angebrachten Anhänger. Dies führt zu einem Auflaufen des Anhängers, was ebenfalls bei gefällebedingt auftretenden Schubkräften beim Bergabfahren zutrifft. Überdies werden auch Situationen berücksichtigt, in denen sowohl der landwirtschaftliche Traktor als auch der Anhänger fahrerseitig durch Betätigung einer zugehörigen Betriebsbremsanlage abgebremst werden, es jedoch aufgrund einer Degradation der Bremswirkung der Radbremseinrichtungen am Anhänger (beispielsweise aufgrund von Verschleiß oder nicht ausreichendem Bremsdruck) zu einer gegenüber dem landwirtschaftlichen Traktor geringeren Bremsverzögerung kommt.

Die Erkennung einer Bergabfahrt kann von der Kontrolleinheit auf Grundlage einer mittels einer weiteren Sensoranordnung ermittelten Neigungswinkelgröße, die eine Neigung des landwirtschaftlichen Traktors um dessen Querachse wiedergibt, und/oder durch GPS-basierte Auswertung topografischer Angaben erfolgen. Die in einer Speichereinheit hinterlegten topografischen Angaben erlauben einen Rückschluss auf den Geländeverlauf entlang der zurückzulegenden bzw. zurückgelegten Fahrtstrecke des landwirtschaftlichen Traktors, wobei diese zum Zwecke der GPSbasierten Auswertung mit Informationen hinsichtlich der aktuellen Position des landwirtschaftlichen Traktors verortet werden. Letztere werden seitens eines mit der Kontrolleinheit in Verbindung stehenden GPS-Navigationssystems zur Verfügung gestellt.

Da eine vom Anhänger an der Anhängekupplung ausgeübte Schubkraft bei im Wesentlichen gestrecktem landwirtschaftlichen Fahrzeuggespann per se zu keinem Über- oder Untersteuern des landwirtschaftlichen Traktors führt, ist es zudem vorstellbar, dass die Durchführung eines fahrerunabhängigen Eingreifens in die Radbremseinrichtungen des Anhängers von der Kontrolleinheit unter dem Vorbehalt erfolgt, dass der Betrag des Knickwinkels zwischen landwirtschaftlichem Traktor und Anhänger einen vorgegebenen Schwellenwert überschreitet.

Des Weiteren besteht die Möglichkeit, dass zur vorausschauenden und damit frühzeitigen Erkennung einer zu erwartenden Über- oder Untersteuerungsneigung des landwirtschaftlichen Traktors von der Kontrolleinheit eine zeitliche Zunahme einer sich aus dem Vergleich von Soll- und Istwert der Gierratengröße ergebenden Abweichung ausgewertet wird. Dies erlaubt es, den voraussichtlichen Verlauf einer Über- oder Untersteuerungsneigung des landwirtschaftlichen Traktors zu bewerten sowie einem schubbedingten Einfluss auf den Knickwinkel durch frühzeitiges Eingreifen in die Radbremseinrichtungen des Anhängers effektiv gegenzusteuern.

Letzteres wird dahingehend unterstützt, als die Kontrolleinheit bei Erkennung einer zu erwartenden Über- oder Untersteuerungsneigung des landwirtschaftlichen Traktors die Radbremseinrichtungen des Anhängers vorab bis zu einem definierten Schleifpunkt vorspannt. Hierdurch lassen sich weiter verbesserte Reaktionszeiten bei der Durchführung der knickwinkelreduzierenden Eingriffe in die Radbremseinrichtungen des Anhängers erreichen. Im Falle einer hydraulischen oder pneumatischen Betätigung der Radbremseinrichtungen kann dies durch Vorfüllen zugehöriger Bremszylinder erfolgen.

Der Lenkeinschlag kann von der Kontrolleinheit auf Grundlage einer mittels eines Lenkwinkelsensors erfassten Lenkwinkelgröße abgeleitet werden, die einen an lenkbaren Rädern des landwirtschaftlichen Traktors eingestellten Radlenkwinkel oder eine damit eindeutig in Beziehung stehende Ersatzgröße wiedergibt. Bei letzterer kann es sich zum Beispiel um eine an einem Lenkzylinder auftretende Auslenkung handeln.

Das erfindungsgemäße Verfahren zur Querstabilisierung eines landwirtschaftlichen Fahrzeuggespanns wird im Folgenden anhand der beigefügten Zeichnungen näher erläutert. Dabei sind übereinstimmende bzw. hinsichtlich ihrer Funktion vergleichbare Komponenten mit denselben Bezugszeichen gekennzeichnet. Es zeigen:

Fig. 1     ein als Flussdiagramm veranschaulichtes Ausführungsbeispiel des erfindungsgemäßen Verfahrens zur Querstabilisierung eines landwirtschaftlichen Fahrzeuggespanns,

Fig. 2     ein schematisch dargestelltes Ausführungsbeispiel einer Einrichtung zur Durchführung des in Fig. 1 wiedergegebenen erfindungsgemäßen Verfahrens,

Fig. 3     eine zu einem schubbedingten Übersteuern des landwirtschaftlichen Traktors führende erste Fahrsituation, und

Fig. 4     eine zu einem schubbedingten Untersteuern des landwirtschaftlichen Traktors führende zweite Fahrsituation.

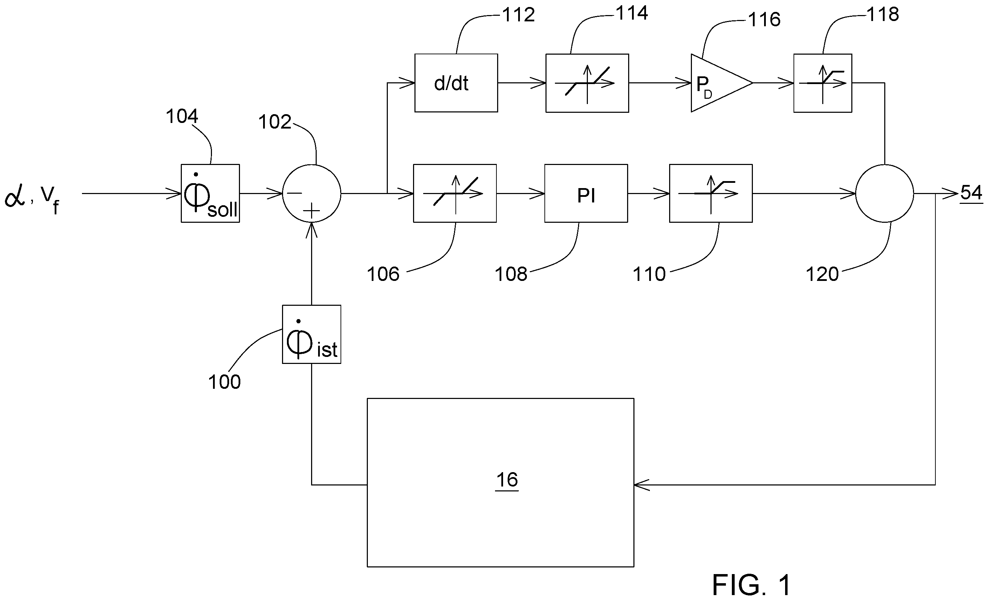

Fig. 1 zeigt ein als Flussdiagramm veranschaulichtes Ausführungsbeispiel des erfindungsgemäßen Verfahrens zur Querstabilisierung eines landwirtschaftlichen Fahrzeuggespanns.

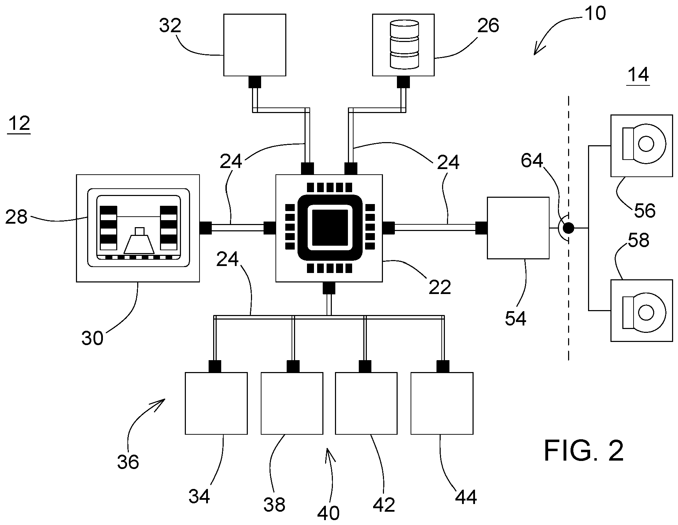

Zunächst soll auf die zu dessen Durchführung vorgesehene Einrichtung 10 entsprechend Fig. 2 eingegangen werden, in der ein aus einem landwirtschaftlichen Traktor 12 sowie einem daran angebrachten Anhänger 14 bestehendes landwirtschaftliches Fahrzeuggespann 16 dargestellt ist, wobei der Anhänger 14 über eine Deichsel 18 an einer Anhängekupplung 20 des landwirtschaftlichen Traktors 12 angebracht ist. Bei der Anhängekupplung 20 handelt es sich beispielsweise um ein Zugmaul oder eine Kugelkupplung.

Die dem landwirtschaftlichen Traktor 12 zugeordnete Einrichtung 10 umfasst eine mikroprozessorgesteuerte Kontrolleinheit 22, die über ein BUS-System 24 mit einer Speichereinheit 26, einem als berührungsempfindliches Display 28 ausgebildeten Grafischen Nutzerinterface 30, einem GPS-Navigationssystem 32, einer als Drehratensensor 34 ausgebildeten ersten Sensoranordnung 36, einer als Neigungssensor 38 ausgebildeten zweiten Sensoranordnung 40, einem Lenkwinkelsensor 42, sowie mehreren Raddrehzahlensensoren 44 zur Erfassung von an zugehörigen Rädern 46, 48, 50, 52 des landwirtschaftlichen Traktors 12 auftretenden Raddrehzahlen kommuniziert.

Ein traktorseitiges Bremssteuergerät 54 ermöglicht ferner eine hydraulische oder pneumatische Betätigung linker und rechter Radbremseinrichtungen 56, 58 des Anhängers 14 zur Abbremsung zugehöriger Räder 60, 62, wobei die Radbremseinrichtungen 56, 58 über einen Druckkuppler 64 mit dem traktorseitigen Bremssteuergerät 54 in Verbindung stehen. Hierbei sei angemerkt, dass es sich entgegen der Darstellung auch um einen mehrachsigen Anhänger, insbesondere auch mit einer gelenkten Deichsel, handeln kann.

Die Kontrolleinheit 22 ist Bestandteil einer nicht näher dargestellten Steuergerätearchitektur des landwirtschaftlichen Traktors 12 und kann der Ausführung weiterer Funktionen zur Fahrdynamikregelung, wie beispielsweise zur Verwirklichung eines ABS-Systems oder dergleichen, dienen.

Unter Bezugnahme auf das in Fig. 1 wiedergegebene Blockdiagramm umfasst das von der Kontrolleinheit 22 durchgeführte und als entsprechender Programmcode in der Speichereinheit 26 abgelegte Verfahren zwei nebengeordnete Regelschleifen 66, 68.

Die durch das erfindungsgemäße Verfahren verwirklichte Assistenzfunktion wird hierbei im Falle eines Anhängerbetriebs über das Grafische Nutzerinterface 30 fahrerseitig oder selbsttätig bei Herstellung einer ISOBUS-Verbindung zwischen Anhänger 14 und landwirtschaftlichem Traktor 12 aktiviert.

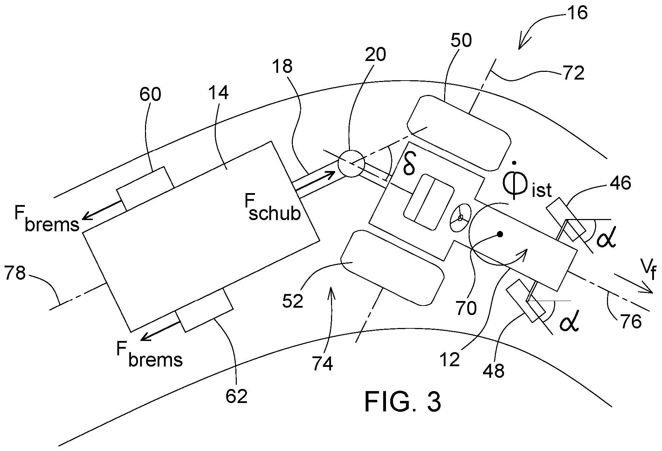

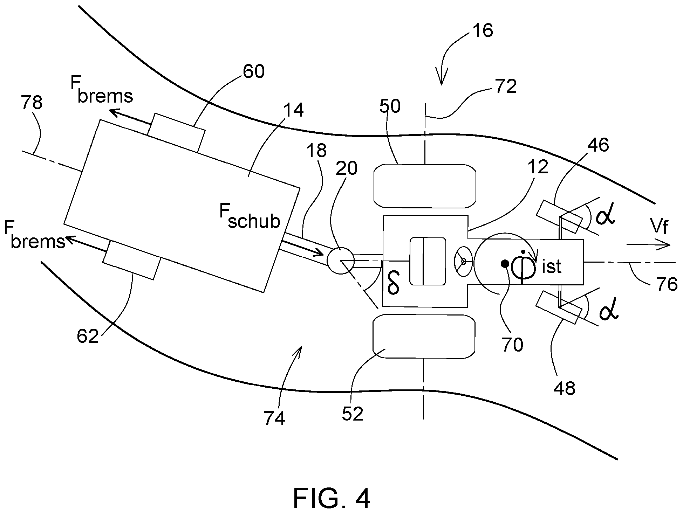

Zunächst wird von der Kontrolleinheit 22 in einem ersten Funktionsblock 100 mittels der ersten Sensoranordnung 36 bzw. des Drehratensensors 34 ein Istwert $\dot{\varphi}_{ist}$ einer eine Gierrate des landwirtschaftlichen Traktors 12 charakterisierenden Gierratengröße ermittelt und in einem zweiten Funktionsblock 102 zur Erkennung einer Über- bzw. Untersteuerungsneigung des landwirtschaftlichen Traktors 12 mit einem für die Gierratengröße in einem dritten Funktionsblock 104 vorgegebenen Sollwert $\dot{\varphi}_{soll}$ verglichen. Die Vorgabe des Sollwerts $\dot{\varphi}_{soll}$ seitens der Kontrolleinheit 22 erfolgt im dritten Funktionsblock 104 entsprechend einem aufgrund von Lenkeinschlag $\alpha$ und Fahrtgeschwindigkeit $v_f$ des landwirtschaftlichen Traktors 12 zu erwartenden Gierverhalten und wird von der Kontrolleinheit 22 auf Grundlage eines sog. linearen Einspurmodells bestimmt. Die Gierrate bezeichnet hierbei die zeitliche Änderung bzw. Geschwindigkeit einer um die Hochachse 70 des landwirtschaftlichen Traktors 12 auftretenden Drehung (siehe hierzu Fig. 3 bzw. 4). Unter Annahme einer standardisierten Deichsellänge werden von der Kontrolleinheit 22 ferner der ungefähre Betrag wie auch das Vorzeichen eines zwischen der Längsachse 76 des landwirtschaftlichen Traktors 12 und der Längsachse 78 des Anhängers 14 eingeschlossen Knickwinkels δ bestimmt.

Der in das lineare Einspurmodell eingehende Lenkeinschlag α wird von der Kontrolleinheit 22 auf Grundlage einer mittels des Lenkwinkelsensors 42 erfassten Lenkwinkelgröße abgeleitet, wobei diese einen an den lenkbaren Rädern 46, 48 des landwirtschaftlichen Traktors 12 eingestellten Radlenkwinkel oder eine damit eindeutig in Beziehung stehende Ersatzgröße wiedergibt. Bei letzterer handelt es sich zum Beispiel um eine an einem Lenkzylinder auftretende Auslenkung. Die in das lineare Einspurmodell ebenfalls eingehende Fahrtgeschwindigkeit $v_f$ des landwirtschaftlichen Traktors 12 ergibt sich aus den von den Raddrehzahlsensoren 44 erfassten Raddrehzahlen.

Sollwert $\dot{\varphi}_{soll}$ und Istwert $\dot{\varphi}_{ist}$ bilden Eingangsgrößen für den zweiten Funktionsblock 102, in dem deren Beträge von der Kontrolleinheit 22 miteinander verglichen werden, um durch Differenzbildung eine zwischen diesen auftretende Regelabweichung zu ermitteln.

Von einer Übersteuerungsneigung des landwirtschaftlichen Traktors 12 ist dann auszugehen, wenn die Differenz zwischen dem Betrag des Istwerts $\dot{\varphi}_{ist}$ und dem Betrag des Sollwerts $\dot{\varphi}_{soll}$ der Gierratengröße größer als Null ist,

$$|\dot{\varphi}_{ist}| > |\dot{\varphi}_{soll}| \quad,$$

wohingegen von einer Untersteuerungsneigung des landwirtschaftlichen Traktors 12 auszugehen ist, wenn die Differenz zwischen dem Betrag des Istwerts $\dot{\varphi}_{ist}$ und dem Betrag des Sollwerts $\dot{\varphi}_{soll}$ der Gierratengröße kleiner als Null ist,

$$|\dot{\varphi}_{ist}| < |\dot{\varphi}_{soll}| \quad.$$

Beide Fahrsituationen haben in Form eines Gierens eine Drehung um die Hochachse des landwirtschaftlichen Traktors zur Folge, was sich in einer entsprechenden Gierrate jeweils unterschiedlicher Richtung bemerkbar macht.

Der Betrag der jeweils ermittelten Regelabweichung bildet die Grundlage sowohl für die erste Regelschleife 66 zur Gierratenregelung wie auch für die zweite Regelschleife 68 zur Gierbeschleunigungsregelung.

Zum einen durchläuft die ermittelte Regelabweichung zunächst einen vierten Funktionsblock 106, in dem ein Totband gesetzt wird, innerhalb dessen liegende Regelabweichungen für einen in einem fünften Funktionsblock 108 vorgesehenen PI-Regler (Proportional-Integral-Regler) ausgeblendet werden. In einem sechsten Funktionsblock 110 erfolgt eine Unterdrückung einer möglichen Sättigung unter Anwendung eines entsprechenden Anti-Windup-Verfahrens. Dies berücksichtigt den Fall, dass die am Ausgang des PI-Reglers anliegende Steuergröße außerhalb des Stellumfangs des nachfolgenden Bremssteuergeräts 54 bzw. der von diesem zu betätigenden anhängerseitigen Radbremseinrichtungen 56, 58 liegt.

Zum anderen durchläuft die ermittelte Regelabweichung einen siebten Funktionsblock 112, in dem die zeitliche Ableitung der ermittelten Regelabweichung gebildet wird. Auch hier wird in einem achten Funktionsblock 114 ein Totband gesetzt, innerhalb dessen liegende zeitliche Änderungen der Regelabweichung für einen in einem neunten Funktionsblock 116 vorgesehenen Verstärker GAIN ausgeblendet werden. In einem zehnten Funktionsblock 118 erfolgt wiederum eine Unterdrückung einer möglichen Sättigung der am Ausgang des Verstärkers GAIN bereitgestellten Steuergröße unter Anwendung eines entsprechenden Anti-Windup-Verfahrens.

Die am sechsten Funktionsblock 110 bzw. zehnten Funktionsblock 118 ausgangsseitig anliegenden Steuergrößen werden von der Kontrolleinheit 22 in einem elften Funktionsblock 120 miteinander kombiniert bzw. überlagert und an das Bremssteuergerät 54 zum Zwecke der entsprechenden Betätigung der anhängerseitigen Radbremseinrichtungen 56, 58 übermittelt.

Zur weiteren Erläuterung der Funktionsweise des erfindungsgemäßen Verfahrens soll auf die in Fig. 3 bzw. 4 dargestellten Fahrsituationen Bezug genommen werden. Diese zeigen das aus landwirtschaftlichem Traktor 12 und Anhänger 14 bestehende landwirtschaftliche Fahrzeuggespann 16 beim Durchfahren einer U- bzw. S-Kurve jeweils unter der Wirkung einer vom Anhänger 14 auf den landwirtschaftlichen Traktor 12 ausgeübten Schubkraft $F_{schub}$.

Entsprechend der in Fig. 3 gezeigten ersten Fahrsituation des landwirtschaftlichen Fahrzeuggespanns 16 führen die beim Durchfahren einer U-Kurve seitens des Anhängers 14 auf das Traktorheck 74 ausgeübten Schubkräfte $F_{schub}$ für den Fall, dass Lenkeinschlag α und Knickwinkel δ gleichsinnig orientiert sind (d.h. die Deichselstellung korrespondiert mit dem Verlauf der aufgrund des Lenkeinschlags α vorgegebenen Kurvenbahn des landwirtschaftlichen Traktors 12), tendenziell zu einem Übersteuern des landwirtschaftlichen Traktors 12, da das Traktorheck 74 über die Anhängekupplung 20 zur Kurvenaußenseite hin gedrückt wird. Hieraus ergibt sich typischerweise eine mehr oder minder vorauseilende, mithin "forcierte" Zunahme des Knickwinkels δ zwischen landwirtschaftlichem Traktor 12 und Anhänger 14.

Die in Fig. 4 wiedergegebene zweite Fahrsituation zeigt das landwirtschaftliche Fahrzeuggespann 16 beim Durchfahren einer S-Kurve, wobei Lenkeinschlag α und Knickwinkel δ gegensinnig orientiert sind (d.h. die Deichselstellung korrespondiert nicht mit der aufgrund

des Lenkeinschlags $\alpha$ vorgegebenen Kurvenbahn des landwirtschaftlichen Traktors 12). Die seitens des Anhängers 14 auf das Traktorheck 74 ausgeübten Schubkräfte $F_{schub}$ führen hier tendenziell zu einem Untersteuern des landwirtschaftlichen Traktors 12, da das Traktorheck 74 über die Anhängekupplung 20 zur Kurveninnenseite hin gedrückt wird. Daraus ergibt sich eine mehr oder minder nacheilende, mithin "retardierte" Abnahme des Knickwinkels $\delta$ zwischen landwirtschaftlichem Traktor 12 und Anhänger 14.

Dies hat jeweils in Form eines Gierens eine entsprechende Drehung um die Hochachse 70 des landwirtschaftlichen Traktors 12 zur Folge, was sich in einer entsprechenden Gierrate bemerkbar macht. Wie anfällig das landwirtschaftliche Fahrzeuggespann 16 für das Auftreten derartiger Instabilitäten ist, hängt unter anderem von den Traktions- bzw. Masseverhältnissen von landwirtschaftlichem Traktor 12 und Anhänger 14 ab.

Für das Auftreten der in Fig. 3 bzw. 4 wiedergegebenen Schubkräfte $F_{schub}$ kommen unterschiedliche Ursachen in Frage. So kommt es bei Einsatz des Retarders, also der Durchführung einer "Motorbremsung" des landwirtschaftlichen Traktors 12, zu einer Bremsverzögerung des landwirtschaftlichen Traktors 12 gegenüber dem daran angebrachten Anhänger 14. Dies führt zu einem Auflaufen des Anhängers 14. Entsprechendes gilt bei gefällebedingt auftretenden Schubkräften $F_{schub}$ beim Bergabfahren oder in Fällen, in denen sowohl der landwirtschaftliche Traktor 12 als auch der Anhänger 14 fahrerseitig durch Betätigung einer zugehörigen Betriebsbremsanlage abgebremst wird, es jedoch aufgrund einer Degradation der Bremswirkung der Radbremseinrichtungen 56, 58 am Anhänger 14 (beispielsweise aufgrund von Verschleiß oder nicht ausreichendem Bremsdruck) zu einer gegenüber dem landwirtschaftlichen Traktor 12 geringeren Bremsverzögerung kommt.

Beispielsgemäß ist die Ausführung der Assistenzfunktion auf diese Fälle beschränkt, die Kontrolleinheit 22 geht daher von einer schubbedingt forcierten Knickwinkelzunahme oder einer schubbedingt retardierten Knickwinkelabnahme ausschließlich dann aus, wenn zugleich eine Betätigung einer Betriebsbremsanlage von landwirtschaftlichem Traktor 12 und Anhänger 14, eines traktorseitigen Retarders und/oder eine Bergabfahrt des landwirtschaftlichen Fahrzeuggespanns 16 erkannt wird.

Die Erkennung einer Bergabfahrt erfolgt von der Kontrolleinheit 22 auf Grundlage einer mittels der zweiten Sensoranordnung 40 bzw. dem Neigungssensor 38 ermittelten Neigungswinkelgröße. Die ermittelte Neigungswinkelgröße gibt hierbei eine Neigung des landwirtschaftlichen Traktors 12 um dessen Querachse 72 wieder. Zusätzlich oder alternativ ist eine GPS-basierte Auswertung topografischer Angaben vorgesehen. Die in der Speichereinheit 26 hinterlegten topografischen Angaben erlauben einen Rückschluss auf den Geländeverlauf entlang der zurückzulegenden bzw. zurückgelegten Fahrstrecke des landwirtschaftlichen Traktors 12, wobei diese zum Zwecke der GPSbasierten Auswertung mit Informationen hinsichtlich der aktuellen Position des landwirtschaftlichen Traktors 12 verortet werden. Letztere werden seitens des mit der Kontrolleinheit 22 in Verbindung stehenden GPS-Navigationssystems 32 zur Verfügung gestellt.

Abgesehen vom Vorhandensein eines Anbaugeräts 14 erhält die Kontrolleinheit 22 einen zusätzlichen Hinweis, ob ein derartiges Verhalten schubbedingt ist, also auf Schubkräfte $F_{schub}$ zurückgeht, die seitens des über die Deichsel 18 an der Anhängekupplung 20 des landwirtschaftlichen Traktors 12 angebrachten Anhängers 14 verursacht werden, aus den jeweiligen Richtungen von Lenkeinschlag $\alpha$ und Knickwinkel $\delta$ zueinander. So geht die Kontrolleinheit 22 von einer schubbedingt forcierten Knickwinkelzunahme bzw. einer schubbedingt retardierten Knickwinkelabnahme ausschließlich dann aus, wenn sich aufgrund eines Vergleichs der Vorzeichen von Lenkeinschlag $\alpha$ und Knickwinkel $\delta$ ergibt, dass diese in gleiche bzw. entgegengesetzte Richtungen weisen, entsprechend den beiden in Fig. 3 bzw. 4 wiedergegebenen Fahrsituationen.

Da eine vom Anhänger 14 an der Anhängekupplung 20 ausgeübte Schubkraft $F_{schub}$ bei im Wesentlichen gestrecktem landwirtschaftlichem Fahrzeuggespann 16 per se zu keinem Über- oder Untersteuern des landwirtschaftlichen Traktors 12 führt, ist zudem vorgesehen, dass die Durchführung eines fahrerunabhängigen Eingreifens in die Radbremseinrichtungen 56, 58 des Anhängers 14 von der Kontrolleinheit 22 unter dem Vorbehalt erfolgt, dass der Betrag des Knickwinkels $\delta$ zwischen landwirtschaftlichem Traktor 12 und Anhänger 14 einen vorgegebenen Schwellenwert $\delta_{min}$ im Bereich einiger weniger Grad überschreitet.

Wird unter den vorstehend beschriebenen Bedingungen ausgehend von einer im zweiten Funktionsblock 102 ermittelten Regelabweichung bei Erkennung einer in einem Anhängerbetrieb auftretenden Über- bzw. Untersteuerungsneigung des landwirtschaftlichen Traktors 12 auf eine schubbedingt forcierte Knickwinkelzunahme oder auf eine schubbedingt retardierte Knickwinkelabnahme geschlossen, so wird diese durch fahrerunabhängiges Eingreifen in die Radbremseinrichtungen 56, 58 ausschließlich des Anhängers 14 gezielt verringert, mit dem Ziel, diese zumindest teilweise zu kompensieren. Durch hinreichendes Abbremsen des Anhängers 14 wird auf diese Weise jeweils eine querstabilisierende Knickwinkelreduzierung herbeigeführt. Anschaulich geschieht dies unter der Wirkung der zur Schubkraft $F_{schub}$ entgegengesetzten Bremskraft $F_{brems}$ durch "Geradeziehen" des landwirtschaftlichen Fahrzeuggespanns 16.

Die zweite Regelschleife 68 dient hierbei der vorausschauenden und damit frühzeitigen Erkennung einer zu erwartenden Über-bzw. Untersteuerungsneigung des landwirtschaftlichen Traktors 12. Hierzu wird von der Kontrolleinheit 22 eine im siebten Funktionsblock 112 abgeleitete zeitliche Zunahme der sich aus dem Vergleich von Sollwert $\dot{\varphi}_{soll}$ und Istwert $\dot{\varphi}_{ist}$ der Gierraten-

größe ergebenden Regelabweichung ausgewertet. Dies erlaubt es, den voraussichtlichen Verlauf einer Über- bzw. Untersteuerungsneigung des landwirtschaftlichen Traktors 12 zu bewerten sowie einem schubbedingten Einfluss auf den Knickwinkel δ durch frühzeitiges Eingreifen in die Radbremseinrichtungen 56, 58 des Anhängers 14 effektiv gegenzusteuern.

Dies wird dahingehend unterstützt, als die Kontrolleinheit 22 die Radbremseinrichtungen 56, 58 des Anhängers 14 vorab bis zu einem definierten Schleifpunkt vorspannt. Hierdurch lassen sich weiter verbesserte Reaktionszeiten bei der Durchführung der knickwinkelreduzierenden Eingriffe in die Radbremseinrichtungen 56, 58 des Anhängers 14 erreichen. Ist wie hier eine hydraulische oder pneumatische Betätigung der Radbremseinrichtungen 56, 58 vorgesehen, so erfolgt dies durch Vorfüllen zugehöriger Bremszylinder.

Die Wirkungsweise des erfindungsgemäßen Verfahrens beruht auf der Erkenntnis, dass bei landwirtschaftlichen Traktoren angesichts der vergleichsweise geringen Fahrtgeschwindigkeiten von höchstens 60 km/h im Straßenverkehr ein Übersteuern bzw. Ausbrechen des Traktorhecks 74 in der Regel auf Schubkräfte $F_{schub}$ zurückgeht, die seitens des über die Deichsel 18 an der Anhängekupplung 20 des landwirtschaftlichen Traktors 12 angebrachten Anhängers 14 verursacht werden. Bei derartigen Fahrtgeschwindigkeiten sind querdynamische Effekte, wie sie beispielsweise im LKW-Bereich beim Durchfahren von Kurven mit überhöhter Fahrtgeschwindigkeit auftreten können, weitgehend ohne Belang.

**Patentansprüche**

1. Verfahren zur Querstabilisierung eines landwirtschaftlichen Fahrzeuggespanns, das aus einem landwirtschaftlichen Traktor (12) sowie einem daran angebrachten Anhänger (14) besteht, bei dem von einer Kontrolleinheit (22) mittels einer dem landwirtschaftlichen Traktor (12) zugeordneten Sensoranordnung (36) ein Istwert einer eine Gierrate des landwirtschaftlichen Traktors (12) charakterisierenden Gierratengröße ermittelt sowie zur Erkennung einer Über- oder Untersteuerungsneigung des landwirtschaftlichen Traktors (12) mit einem für die Gierratengröße vorgegebenen Sollwert verglichen wird, wobei die Vorgabe des Sollwerts seitens der Kontrolleinheit (22) entsprechend einem aufgrund von Lenkeinschlag und Fahrtgeschwindigkeit des landwirtschaftlichen Traktors (12) zu erwartenden Gierverhalten erfolgt, **dadurch gekennzeichnet, dass** von der Kontrolleinheit (22) bei Erkennung einer in einem Anhängerbetrieb auftretenden Übersteuerungsneigung des landwirtschaftlichen Traktors (12) auf eine schubbedingt forcierte Knickwinkelzunahme oder bei Erkennung einer in einem Anhängerbetrieb auftretenden Untersteuerungsneigung des landwirtschaftlichen Traktors (12) auf eine schubbedingt retardierte Knickwinkelabnahme geschlossen sowie durch fahrerunabhängiges Eingreifen in Radbremseinrichtungen (56, 58) ausschließlich des Anhängers (14) zumindest teilweise kompensiert wird.

2. Verfahren nach Anspruch 1, **dadurch gekennzeichnet, dass** die Kontrolleinheit (22) von einer schubbedingt forcierten Knickwinkelzunahme oder einer schubbedingt retardierten Knickwinkelabnahme ausschließlich dann ausgeht, wenn zugleich eine Betätigung einer Betriebsbremsanlage von landwirtschaftlichem Traktor (12) und Anhänger (14), eines traktorseitigen Retarders und/oder eine Bergabfahrt des landwirtschaftlichen Fahrzeuggespanns (16) erkannt wird.

3. Verfahren nach Anspruch 2, **dadurch gekennzeichnet, dass** die Erkennung einer Bergabfahrt von der Kontrolleinheit auf Grundlage einer mittels einer weiteren Sensoranordnung ermittelten Neigungswinkelgröße, die eine Neigung des landwirtschaftlichen Traktors um dessen Querachse wiedergibt, und/oder durch GPS-basierte Auswertung topografischer Angaben erfolgt.

4. Verfahren nach wenigstens einem der vorhergehenden Ansprüche, **dadurch gekennzeichnet, dass** die Durchführung eines fahrerunabhängigen Eingreifens in die Radbremseinrichtungen (56, 58) des Anhängers (14) von der Kontrolleinheit (22) unter dem Vorbehalt erfolgt, dass der Betrag des Knickwinkels zwischen landwirtschaftlichem Traktor (12) und Anhänger (14) einen vorgegebenen Schwellenwert überschreitet.

5. Verfahren nach wenigstens einem der vorhergehenden Ansprüche, **dadurch gekennzeichnet, dass** zur vorausschauenden Erkennung einer zu erwartenden Über- oder Untersteuerungsneigung des landwirtschaftlichen Traktors (12) von der Kontrolleinheit (22) eine zeitliche Zunahme einer sich aus dem Vergleich von Soll- und Istwert der Gierratengröße ergebenden Abweichung ausgewertet wird.

6. Verfahren nach Anspruch 5, **dadurch gekennzeichnet, dass** die Kontrolleinheit (22) bei Erkennung einer zu erwartenden Über- oder Untersteuerungsneigung des landwirtschaftlichen Traktors (12) die Radbremseinrichtungen (56, 58) des Anhängers (14) vorab bis zu einem definierten Schleifpunkt vorspannt.

7. Verfahren nach wenigstens einem der vorhergehenden Ansprüche, **dadurch gekennzeichnet, dass** der Lenkeinschlag von der Kontrolleinheit (22) auf Grundlage einer mittels eines Lenkwinkelsensors (42) erfassten Lenkwinkelgröße abgeleitet wird, die einen an lenkbaren Rädern (46, 48) des landwirtschaftlichen Traktors (12) eingestellten Radlenkwinkel oder eine damit eindeutig in Beziehung stehende Ersatzgröße wiedergibt.

FIG. 1

FIG. 2

FIG. 3

FIG. 4

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 121763 A1 (ZF CV SYSTEMS GLOBAL GMBH [CH]) 23. Februar 2023 (2023-02-23) | 1,4,7 | INV. B60T8/17 |
| Y | * Absätze [0013], [0020], [0030], [0049] *<br>* Abbildung 3 * | 1-7 | B60T8/1755<br>B60T8/24 |
| | ----- | | |
| Y | DE 10 2021 119819 A1 (CLAAS TRACTOR SAS [FR]) 2. Februar 2023 (2023-02-02)<br>* Absätze [0007] - [0010] * | 1,7 | |
| | ----- | | |
| Y | DE 10 2016 219390 A1 (ZAHNRADFABRIK FRIEDRICHSHAFEN [DE])<br>12. April 2018 (2018-04-12)<br>* Absätze [0027], [0030], [0032] * | 1-7 | |
| | ----- | | |
| Y | DE 10 2017 011802 A1 (WABCO EUROPE BVBA [BE]) 27. Juni 2019 (2019-06-27)<br>* Absätze [0002], [0005] * | 2,3 | |
| | ----- | | |

**RECHERCHIERTE SACHGEBIETE (IPC)**

B60T

Der vorliegende Recherchenbericht wurde für alle Patentansprüche erstellt

| Recherchenort | Abschlußdatum der Recherche | Prüfer |
|---|---|---|
| München | 5. Juni 2025 | Colonna, Massimo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 25 15 1475

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2025

| Im Recherchenbericht angeführtes Patentdokument | Datum der Veröffentlichung | Mitglied(er) der Patentfamilie | Datum der Veröffentlichung |
|---|---|---|---|
| DE 102021121763 A1 | 23-02-2023 | KEINE | |
| DE 102021119819 A1 | 02-02-2023 | DE 102021119819 A1 | 02-02-2023 |
| | | EP 4124524 A1 | 01-02-2023 |
| DE 102016219390 A1 | 12-04-2018 | KEINE | |
| DE 102017011802 A1 | 27-06-2019 | DE 102017011802 A1 | 27-06-2019 |
| | | EP 3727965 A1 | 28-10-2020 |
| | | WO 2019120604 A1 | 27-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19859953 A1